# FASCICULE DE BREVET EUROPEEN

(11) **EP 4 045 338 B1**
(45) Date de publication et mention de la délivrance du brevet: **05.07.2023**
(21) Numéro de dépôt: 20801332.6
(22) Date de dépôt: 13.10.2020
(51) Int. Cl.: B60C 11/03

(54) **PNEUMATIQUE POUR VEHICULE A USAGE AGRICOLE**
REIFEN FÜR EIN LANDWIRTSCHAFTLICHES FAHRZEUG
TYRE FOR AN AGRICULTURAL VEHICLE

(30) Priorité: 16.10.2019 FR 1911506
(43) Date de publication de la demande: 24.08.2022
(73) Titulaire: COMPAGNIE GENERALE DES ETABLISSEMENTS MICHELIN, 63000 Clermont-Ferrand (FR)
(72) Inventeur: OUVRAY, Delphine, 63040 CLERMONT-FERRAND Cedex 9 (FR); BROCHET, Philippe, 63040 CLERMONT-FERRAND Cedex 9 (FR); HOUIS, Catherine, 63040 CLERMONT-FERRAND Cedex 9 (FR); VERVAET, Patrick, décédé (FR); VENIANT, Gabriel, 63040 CLERMONT-FERRAND Cedex 9 (FR)
(74) Mandataire: Le Cam, Stéphane Georges Elie
(86) Numéro de dépôt international: PCT/FR2020/051807
(87) Numéro de publication internationale: WO 2021/074517

(56) Documents cités:
- EP-A1- 0 442 427
- EP-A2- 0 162 003
- US-A- 5 733 394
- US-B1- 6 651 712

## Description

La présente invention a pour objet un pneumatique pour véhicule agricole tel qu'un tracteur. Elle a plus particulièrement pour objet la sculpture de la bande de roulement du pneumatique, destinée à entrer à contact avec un sol par l'intermédiaire d'une surface de roulement.

Un pneumatique agricole est amené à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneumatique agricole, et en particulier sa bande de roulement, doit présenter un compromis de performances variable selon l'usage. Lors d'un usage en champ, les performances visées sont essentiellement une capacité de traction efficace, un faible compactage du sol et une faible résistance à l'avancement. Lors d'un usage sur route, les performances visées sont une capacité de vitesse efficace, une faible résistance au roulement et surtout un bon comportement routier.

Pour satisfaire cet ensemble de performances, la bande de roulement d'un pneumatique pour véhicule agricole comprend généralement une pluralité de barrettes. Les barrettes sont des éléments en relief par rapport à une surface de révolution autour de l'axe de rotation du pneumatique, appelée surface de fond.

Une barrette a généralement une forme globalement parallélépipédique allongée, constituée d'au moins une portion rectiligne ou curviligne, et est séparée des barrettes adjacentes par des rainures. Une barrette peut être constituée d'une succession de portions rectilignes, telle que décrite, par exemple, dans les documents US 3603370, US 4383567, EP 795427 ou avoir une forme curviligne, telle que présentée dans les documents US 4446902, EP 903249, EP 1831034.

Une barrette a usuellement, mais pas obligatoirement, un angle d'inclinaison moyen, par rapport à la direction circonférentielle, proche de 45°. En effet, cet angle d'inclinaison moyen permet en particulier un bon compromis entre la traction en champ et le confort vibratoire. La traction en champ est d'autant meilleure que la barrette est axiale, c'est-à-dire que son angle d'inclinaison moyen, par rapport à la direction circonférentielle, est proche de 90°, alors que le confort vibratoire est d'autant meilleur que 1a barrette est circonférentielle, c'est-à-dire que son angle d'inclinaison moyen, par rapport à la direction circonférentielle, est proche de 0°. Il est notoire que la traction en champ est plus fortement déterminée par l'angle de la barrette au niveau de l'épaule, ce qui a amené certains concepteurs de pneumatiques à proposer une forme de barrette très incurvée, conduisant à une barrette sensiblement axiale à l'épaule et sensiblement circonférentielle au milieu de la bande de roulement.

Selon la direction radiale, une barrette s'étend à partir de la surface de fond jusqu'à la surface de roulement, la distance radiale entre la surface de fond et la surface de roulement définissant la hauteur de barrette. La face radialement extérieure de la barrette, appartenant à la surface de roulement, qui entre en contact avec le sol, lors du passage de la barrette dans la surface de contact du pneumatique avec le sol, est appelée face de contact de la barrette. On appelle pied de barrette la portion de barrette au voisinage de la surface de fond. Par définition, le plan équatorial est un plan circonférentiel, perpendiculaire à l'axe de rotation du pneumatique et passant par le milieu de sa bande de roulement.

L'épaisseur de la barrette est la moyenne des épaisseurs mesurées sur la surface de roulement aux extrémités axialement extérieure, intérieure et au centre de la barrette. Les épaisseurs sont mesurées sur la surface de roulement orthogonalement à la courbe moyenne de la surface de roulement.

Dans ce qui suit, on appelle nez de barrette, une portion de barrette axialement intérieure, et aile de barrette, une portion de barrette axialement extérieure. Une famille de barrettes est un ensemble de barrettes avec la même géométrie (hauteur, longueur, épaisseur, pas de distribution au tour de roue). Un motif de sculpture s'étend sur toute la largeur axiale de la bande de roulement et comprend deux barrettes symétriques par rapport au plan équatorial et sont décalées dans la direction circonférentielle.

La bande de roulement d'un pneumatique pour véhicule agricole comprend généralement deux rangées de barrettes telles que précédemment décrites et présentant une symétrie par rapport au plan équatorial du pneumatique. Cette distribution de barrettes inclinées par rapport à la direction circonférentielle confère à la bande de roulement une forme en "V" couramment dénommée motif en chevrons. Le plus souvent il existe un décalage circonférentiel entre les deux rangées de barrettes, résultant d'une rotation autour de l'axe du pneumatique. En outre, les barrettes peuvent être continues ou discontinues, et réparties circonférentiellement avec un pas constant ou variable.

Un bon comportement routier se traduit par un confort ou un agrément de conduite perçu par l'usager à l'intérieur du véhicule. Ce confort est lié à l'aptitude du pneumatique à absorber les irrégularités du sol pour filtrer les vibrations mécaniques et acoustiques perçues par l'usager.

Classiquement, la performance de confort comprend quatre aspects : le confort vertical, le contact, le bourdonnement de caisse et la non-uniformité. Pour les pneumatiques agricoles, ce sont principalement le bourdonnement de caisse et la non-uniformité qui sont les composantes du confort impactant le plus l'agrément de conduite.

Le bourdonnement de caisse se rencontre lors du roulage en ligne droite à vitesse constante sur une route avec un revêtement de type macro-rugueux, c'est-à-dire comprenant des aspérités de l'ordre de 4mm réparties sur une distance de 50 mm. Le bourdonnement de caisse est donc une gêne acoustique perçue à l'intérieur du véhicule en roulage, il est à distinguer du bruit à l'extérieur du véhicule qui représente la gêne perçue par les riverains.

Enfin la non-uniformité se manifeste sur des routes d'excellente planéité à vitesse stabilisée où la gêne ressentie se traduit par des vibrations au niveau du volant, des sièges et du plancher du véhicule.

Plus précisément, parmi les dimensions de pneumatiques concernées par l'invention, certaines sont destinées à être montées sur les essieux arrière de véhicules agricoles, ont après montage sur la jante et gonflage, des diamètres extérieurs compris entre 1,75m et 2,15m. En général, le nombre de barrettes est le plus souvent compris entre 15 et 25 pour une rangée circonférentielle de barrettes, ce qui correspond, pour la bande de roulement complète comprenant deux rangées circonférentielles de barrettes à un nombre compris entre 30 et 50 barrettes.

Lors du roulage du véhicule sur route, l'entrée dans l'aire de contact des barrettes génère un martèlement du sol. Dans les configurations classiques de réalisation décrites ci-dessus, pour une vitesse du véhicule autour de 50 km/h, la fréquence d'entrée dans l'aire de contact des barrettes est donc comprise entre 80 et 130 Hz. La forme, généralement agressive des barrettes entraine des sollicitations vibratoires à ces fréquences.

Par ailleurs, les cabines de tracteur ont une largeur généralement comprise entre 1,3 m et 1,7 m. Ceci amène, en général, l'apparition d'au moins un mode propre structurel ou de cavité de la cabine compris entre 100 et 130 Hz. En plus des sollicitations vibratoires, les barrettes peuvent générer des gênes auditives en cabine quand une harmonique de la sculpture rentre en résonance avec un mode propre de la cabine.

La modernisation des véhicules agricoles et l'augmentation des tailles des exploitations agricoles amène une augmentation des usages routiers à haute vitesse et donc une augmentation de l'occurrence de ces problèmes de bruit.

Les documents US5733394, EP0442427A1, et EP0162003A2 divulguent des pneumatiques agricoles radiaux avec des bandes de roulement comprenant des barrettes de tailles différentes.

Les caractéristiques de conception des bandes de roulement à barrettes de l'état de la technique ne permettent pas aujourd'hui d'obtenir un compromis optimal entre les performances en usage en champ, telles que la capacité de traction et la résistance à l'avancement, et les performances en usage sur route, telles que le confort et l'agrément de conduite.

Les inventeurs se sont donnés pour objectif d'améliorer le compromis entre, d'une part, le confort acoustique ou l'agrément de conduite d'un véhicule agricole sur route asphaltée et d'autre part sa capacité de traction lors de son utilisation en champ.

Ce but a été atteint selon l'invention par un pneumatique pour véhicule à usage agricole comprenant une bande de roulement, destinée à entrer en contact avec un sol par l'intermédiaire d'une surface de roulement:
- la bande de roulement comprenant des éléments en relief, ci-après désignés barrettes, séparés au moins en partie les uns des autres par des rainures et s'étendant radialement vers l'extérieur à partir d'une surface de fond jusqu'à la surface de roulement sur une hauteur radiale H au moins égale à 30 mm et au plus égale à l'épaisseur radiale Hₘₐₓ de la bande de roulement;
- les barrettes étant réparties en deux rangées circonférentielles (R1, R2) ; une première rangée circonférentielle (R1) étant constituée d'une distribution circonférentielle d'au moins deux familles de barrettes, réparties périodiquement sur la circonférence du pneumatique;
- les barrettes d'une première famille ayant une longueur circonférentielle L1 et étant réparties circonférentiellement avec un pas S le plus court, et les barrettes d'une deuxième famille ayant une longueur circonférentielle L2 et étant réparties circonférentiellement avec un pas L le plus long;
- chaque barrette de la première rangée circonférentielle (R1) étant en outre inclinée d'un angle Ψ par rapport à la direction circonférentielle (XX') du pneumatique;
- la deuxième rangée circonférentielle (R2) étant obtenue par une symétrie de la première rangée circonférentielle (R1) par rapport à un plan équatorial, passant par le centre de la bande de roulement et perpendiculaire à l'axe de rotation (YY') du pneumatique , puis par un décalage en rotation d'angle θ autour de l'axe de rotation (YY');
- le décalage en rotation étant caractérisé par une distance de recouvrement (R) entre les barrettes de la première rangée circonférentielle et celles de la deuxième rangée circonférentielle, définie comme la distance circonférentielle entre l'extrémité axialement extérieure de toute barrette de la première rangée circonférentielle (R1) et l'extrémité axialement intérieure de la barrette de la deuxième rangée circonférentielle (R2) en vis-à-vis ;
- le rapport S/L du pas S le plus court de la première famille de barrettes divisé par le pas L le plus long de la deuxième famille de barrettes est compris dans l'intervalle [0.6 ; 0.8] ;
- la distance circonférentielle de recouvrement R entre les première et deuxième rangées circonférentielles de barrettes est constante sur toute la circonférence du pneumatique.

L'idée de base de l'invention est de concevoir la sculpture de la bande de roulement, c'est-à-dire la répartition circonférentielle des barrettes, de manière à éviter la coïncidence des harmoniques de la sculpture excitée par le sol avec les modes propres de la cabine du tracteur montée sur le châssis. La sculpture des pneumatiques agricoles est formée de barrettes inclinées à la géométrie relativement simple en comparaison de la sculpture d'un pneumatique pour véhicule tourisme. L'effort de conception de la sculpture va porter sur la géométrie des barrettes en termes d'épaisseur et de longueur, et sur la détermination de l'arrangement optimal des barrettes au tour de roue par rapport au bruit généré.

Selon une première caractéristique essentielle de l'invention, le rapport S/L du pas S le plus court de la première famille de barrettes divisé par le pas L le plus long de la deuxième famille de barrettes est compris dans l'intervalle [0.6 ; 0.8]. La sculpture comprend au moins deux familles de barrettes qui sont reproduites sur un tour de roue selon les pas circonférentiels S et L. Le plus petit pas et le plus long pas sont dans un rapport idéalement égal à 0.7, ou tout au moins inclus dans l'intervalle [0.6 ; 0.8].

Quand le rapport de pas est inférieur à 0.6, l'écart entre les deux pas devient trop grand et entraine une discontinuité trop importante de l'arrangement des motifs de la sculpture au tour de roue.

Inversement, pour un rapport de pas au-delà de 0.8, la distance inter barrettes devient trop faible, la sculpture devient proche d'une solution mono pas qui ne donne pas satisfaction quant au niveau de bruit généré. Sur une dimension pneumatique telle que la dimension 710/70 R42, un rapport de pas égal à 0.7 donne une différence de longueur des pas L-S de 100 mm. Au-delà de 0.8, la différence entre L1 et L2 est trop petite pour pourvoir brouiller le signal acoustique. Toujours sur le même exemple dimensionnel, un rapport de rapport de 0.8, conduit à une différence de longueurs L-S de 63 mm.

La géométrie des barrettes et les pas de répétition sont liés. La longueur L1 de la barrette associée au pas court S est plus petite que la longueur L2 de la barrette associée au pas long L. Plus la longueur de la barrette est petite et donc le nombre de barrettes sur la circonférence du pneumatique augmente et plus la fréquence de répétition de cette barrette est élevée. L'alternance aléatoire des pas de répétition court et long a pour effet de brouiller le signal d'excitation du pneumatique lors du passage à l'entrée et à la sortie de l'aire de contact. Les portions de barrettes de la sculpture arrivant successivement au sol créent une percussion cadencée. Un dessin de sculpture qui alterne aléatoirement des motifs courts et long évite la génération de bruit dit de sirènement.

Selon la deuxième caractéristique essentielle de l'invention, la distance circonférentielle de recouvrement R entre les première et deuxième rangées circonférentielles de barrettes est constante sur toute la circonférence du pneumatique.

Le recouvrement R est la distance circonférentielle entre l'extrémité axialement extérieure d'une barrette d'une rangée et l'extrémité axialement intérieure d'une barrette en vis-à-vis dans la rangée symétrique. Ainsi chaque barrette définit la position de la barrette symétrique suivante.

Il est connu que les mécanismes de génération du bruit de roulement prennent naissance notamment à l'entrée et la sortie de l'aire de contact. Les barrettes de la sculpture martèlent le sol en transmettant des vibrations radiales et tangentielles aux flancs et à la ceinture du pneumatique ainsi qu'au véhicule. Ces vibrations sont à l'origine d'une puissance acoustique qui est ensuite rayonnée à l'intérieur et à l'extérieur du véhicule.

Avec un recouvrement constant, le pneumatique reste toujours en contact avec le sol sur la même quantité de portions de barrettes en entrée et en sortie de l'air de contact ce qui a pour effet d'éviter un martèlement trop brutal, et donc d'affaiblir la fonction d'excitation du pneumatique.

La combinaison des caractéristiques essentielles de l'invention permet en particulier de minimiser le niveau de bruit généré par la sculpture à barrettes sur route asphaltée tout en conservant les propriétés attendues pour un usage du pneumatique dans les champs.

Avantageusement, la distance de recouvrement R entre les première et deuxième rangées circonférentielles de barrettes est comprise dans l'intervalle [L/2 ; L/4]. Un recouvrement nul entraînerait lors du passage dans l'aire de contact, un contact avec le sol au niveau du fond de la sculpture dans la rainure entre deux barrettes. Le contact avec le sol s'établirait alternativement soit sur la barrette soit entre deux barrettes. Ce martèlement avec une amplitude égale à la hauteur de la barrette serait très néfaste pour le bruit. Pour minimiser le bruit généré, le recouvrement a donc une valeur minimale de L/4 et a une valeur maximale de L/2. Typiquement, sur la dimension 710/70 R42, avec une circonférence de 6530 mm, le recouvrement est de 189 mm.

Dans un mode de réalisation de l'invention, l'angle de rotation θ de la deuxième rangée circonférentielle (R2) par rapport à la première rangée circonférentielle (R1) est compris dans l'intervalle [5°; 15°].

Par construction, chaque barrette d'une rangée forme avec son symétrique par rapport au plan équatorial un motif de sculpture qui s'étend sur toute 1a largeur axiale de la bande de roulement. L'extrémité axialement extérieure ou l'extrémité axialement intérieure d'une barrette est positionnée de manière à ce que la distance de recouvrement soit constante. Autrement dit, la distance de recouvrement, l'angle de rotation et la circonférence du pneumatique sont liés. La distance de recouvrement est maximale quand elle vaut la moitié du pas le plus long, ce qui correspond à environ une rotation de 15° pour les dimensions pneumatiques concernées par l'invention.

Avantageusement, les barrettes de la première famille ayant une épaisseur moyenne E1 et les barrettes de la deuxième famille ayant une épaisseur moyenne E2, la variation relative d'épaisseur (E2-E1/E2) est inférieure ou égale à 25%.

La géométrie des barrettes est ajustée de manière à garantir un recouvrement constant des barrettes. Cet ajustement consiste à faire varier la longueur et l'épaisseur des barrettes dans des proportions cohérentes pour éviter des excitations parasites de non uniformité massique au tour de roue.

Un principe d'ajustement des épaisseurs est d'assurer que le ratio de la surface de contact de chaque barrette sur la surface d'un rectangle de longueur égale à la demi largeur de la bande de roulement, et de largeur égale à la longueur d'une barrette est identique quelle que soit la barrette considérée.

Une autre idée pour le réglage de la géométrie de la barrette est de parvenir à une distribution de la masse de façon la plus uniforme possible autour de l'axe de rotation du pneumatique. Le balourd dynamique ou balourd de couple est une gêne causée par une non-uniformité résultant d'une dissymétrie de répartition massique par rapport au centre de rotation du pneumatique sans déplacement du centre de gravité. Cette non-uniformité crée quand le pneumatique est en rotation des forces centrifuges qui forment un couple par rapport au centre l'enveloppe et est à l'origine d'une gêne causée par des vibrations latérales.

La non-uniformité de masse génère aussi un balourd statique résultant d'une dissymétrie de la répartition massique du pneumatique qui correspond à une excentricité du centre de gravité dans le plan de symétrie du pneumatique. Le balourd statique crée quand le pneu est en rotation une force centrifuge qui s'exerce sur le plan de symétrie du pneumatique. Il occasionne des vibrations verticales perçues dans le véhicule.

Pour une sculpture comprenant trois géométries de barrettes A, B, C, classées par ordre croissant de longueur, les épaisseurs associées sont classées dans l'ordre 94/100/116 avec pour référence l'épaisseur de la barrette intermédiaire B. Les inventeurs proposent que les écarts maximums des épaisseurs entre les barrettes extrêmes soient inférieurs ou égaux à 25%.

Préférablement, l'angle Ψ d'inclinaison moyenne de chaque barrette avec la direction circonférentielle (XX') est inférieur ou égal à 50°.

D'une part le pneumatique cuit dans un moule qui reproduit la sculpture sur la bande de roulement à la fin de la cuisson. Pour une sculpture constituée de barrettes, le démoulage est facilité quand toutes les barrettes font le même angle avec la direction circonférentielle.

Et d'autre part le compromis de performances entre la capacité de traction dans les champs, et le bruit de roulement sur route asphaltée conduit à choisir l'angle d'inclinaison des barrettes à une valeur inférieure ou égale à 50°. Une inclinaison égale à 90° serait optimale pour la performance traction, mais néfaste pour le bruit, alors qu'une valeur d'inclinaison à 0° serait rédhibitoire pour la traction mais optimale pour le bruit.

Dans un mode de réalisation de l'invention, la bande de roulement comprend au moins deux rangées de barrettes avec trois familles (A, B, C) dont l'arrangement des familles suit la séquence ABBCCBAABAABBCCBCCBAABC.

L'utilisation de trois géométries de barrettes facilite l'atténuation du bruit avec un brouillage plus efficace du signal d'excitation de la sculpture comparativement à une sculpture mono pas ou encore avec seulement deux famille de barrettes. Au-delà de trois familles de barrette, le coût de revient industriel du moule en phase de conception et en phase d'utilisation se dégrade significativement.

Pour les dimensions pneumatiques considérées, un arrangement avec une rangée de 23 barrettes suivant la séquence ABBCCBAABAABBCCBCCBAABC, éloigne la fréquence de vibration de la sculpture avec celle de la cabine du tracteur.

Dans un autre mode de réalisation de l'invention, la bande de roulement comprenant au moins deux rangées de barrettes avec trois familles (A, B, C) associées respectivement au pas le plus court S, au pas intermédiaire M, et au pas le plus long L, le pas intermédiaire M est égal à la moyenne arithmétique du pas le plus court S et du pas le plus long L.

Selon les inventeurs, il est possible de déterminer des arrangements de barrettes qui évitent la coïncidence des harmoniques de la sculpture excitée par le sol avec les modes propres de la cabine du véhicule pour différents nombres de barrettes. A titre d'exemple, une bande de roulement ayant un développement au centre compris dans l'intervalle [6300 ; 6850] mm, et ayant deux rangées de N barrettes, N allant de 20 à 25, chacune desdites rangées ayant trois familles de barrettes (A, B, C), a un arrangement des familles de barrettes qui suit les séquences suivantes pour chaque rangée :
- N=20, la séquence est : BCCCBBAAAAACBBCABBAA
- N=21, la séquence est : AABCBCAACBAABCCCBBBAA
- N=22, la séquence est : CCABBBBBAAACCCCBAAAAAB
- N=23, la séquence est : ABBCCBAABAABBCCBCCBAABC
- N=24, la séquence est : BBCCCBBAAAABCCCAAABBBCAA
- N=25, la séquence est : BBCBBAAABCCCBBBAAAAACCCAA.

Toujours à titre d'exemple, une bande de roulement ayant un développement au centre cette fois-ci compris dans l'intervalle [5500 ; 6000] mm, et ayant deux rangées de N barrettes, N allant de 20 à 25, chacune desdites rangées ayant trois familles de barrettes (A, B, C) a un arrangement des familles de barrettes qui suit les séquences suivantes pour chaque rangée :
- N=20, la séquence est : BBACBCAAAAABBCCCBAAB
- N=21, la séquence est : CCAACBBAABCCCBBBAAAAB
- N=22, la séquence est : CCAABABBBBBCCAAAAAABCC
- N=23, la séquence est : BAAAAAABCCCBBAAACBBBBCC
- N=24, la séquence est : BCCAAAAACCCCBBAABBAACBBB
- N=25, la séquence est : BBAACCCAAAAABBBCCCBAAABBC.

Des dimensions normalisées au sens de l'ETRTO telles que 710/70R42, et 650/65R38, ont des développements circonférentiels au centre de la bande de de roulement compatibles avec l'utilisation de ces arrangements des barrettes de la sculpture.

Encore avantageusement, la bande de roulement ayant un taux d'entaillement volumique TEV égal au rapport entre le volume total des rainures séparant les éléments en relief et le volume total radialement compris entre la surface de fond et la surface de roulement, le taux d'entaillement volumique TEV est compris entre 50% et 80%.

La performance traction lors de l'utilisation dans les champs implique d'avoir un taux d'entaillement adapté de l'ordre de 80% au maximum. Ce compromis englobe la durée de vie du pneumatique avec un volume de gomme à user en cohérence avec l'endurance du pneumatique.

La présente invention sera mieux comprise à l'aide des figures schématiques et non représentées à l'échelle, j ointes en annexe :
- figure 1-A : illustration de la sculpture de la bande de roulement d'un pneumatique selon l'invention.
- figure 1-B : motifs de la sculpture de la bande de roulement d'un pneumatique selon l'invention, illustrant le principe de construction de la sculpture.
- figure 1-C : déroulé de la bande de roulement d'un pneumatique de l'invention avec les motifs de sculpture.
- figure 2 : Spectre du signal associé à l'arrangement de séquence : ABBCCBAABAABBCCBCCBAABC des motifs de la sculpture de la bande de roulement.
- figure 3 : Spectre de la réponse acoustique mesurée du pneumatique de l'invention en roulage sur une route asphaltée à plus de 40 km/h.

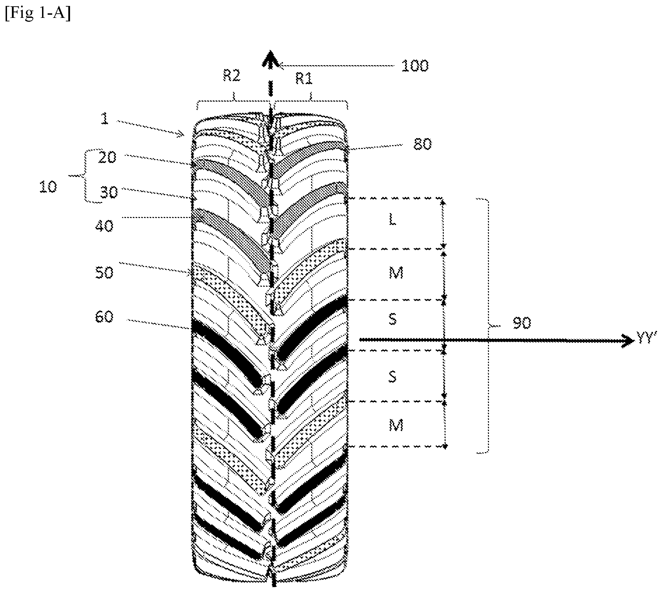

Plus précisément, la figure 1-A représente un pneumatique 1 pour véhicule à usage agricole conforme à l'invention comprenant une bande de roulement 10, destinée à entrer en contact avec un sol par l'intermédiaire d'une surface de roulement:
- La bande de roulement 10 comprenant des éléments en relief, ci-après désignés barrettes (40, 50, 60), séparés au moins en partie les uns des autres par des rainures 30 et s'étendant radialement vers l'extérieur à partir d'une surface de fond jusqu'à la surface de roulement sur une hauteur radiale H au moins égale à 30 mm et au plus égale à l'épaisseur radiale Hmax de la bande de roulement 10 ;
- la bande de roulement 10 comprenant deux rangées de barrettes (R1, R2), une première rangée R1 étant constituée d'une distribution circonférentielle de trois familles de barrettes (A, 60), (B, 50) et (C, 40) sur un tour de roue ; le famille (A, 40) étant reproduit avec un pas S le plus court est d'une longueur L1, le famille (C, 40) étant reproduit avec un pas L le plus long est d'une longueur L2, à la famille (B, 50) est associée un pas intermédiaire M défini comme étant la moyenne arithmétique des pas S et L ;
- A chaque barrette (A, B, C) est donc associé respectivement un pas de répétition (S, M, L) comme représenté en 90 qui illustre un extrait d'arrangement des motifs de la bande de roulement avec l'enchainement des pas successifs.

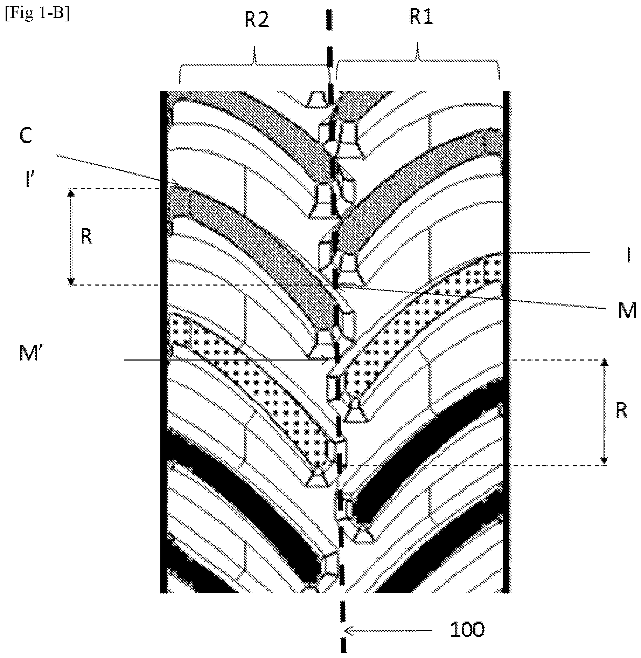

La figure 1-B représente des motifs de sculpture qui s'étendent sur toute la largeur de la bande de roulement. Chaque motif est formé de deux barrettes symétriques. Les extrémités axiales d'une barrette, I pour la rangée R1 et I' pour la rangée R2 sont positionnées par rapport aux extrémités axiales de la barrette au centre de la bande de roulement (M' et M). Le principe de construction de la sculpture de la bande de roulement requiert de partir d'une barrette de la rangée R1, puis de positionner la même barrette dans la rangée R2 par symétrie par rapport au plan équatorial 100 de manière à ce que l'extrémité axiale I' soit à une distance donnée R de l'extrémité M de la barrette initiale de la rangée R1.

La figure 1-B illustre le principe de construction précédent avec un enchaînement de plusieurs motifs de sculpture formés des trois familles de barrette A, B, C.

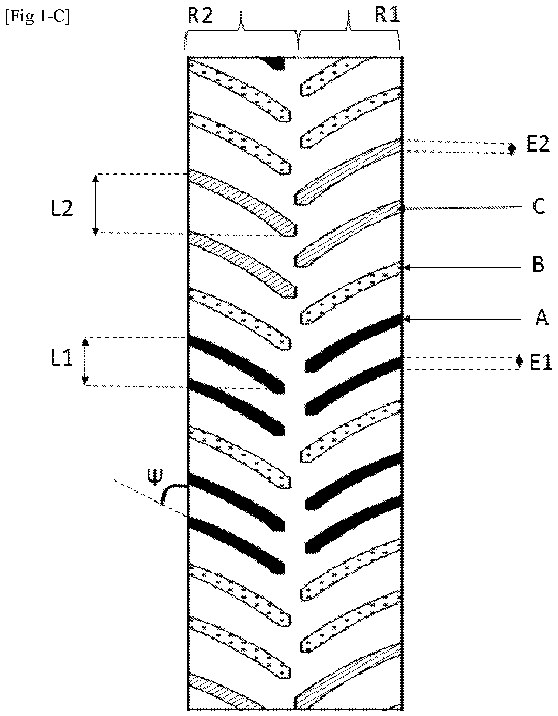

La figure 1-C montre le déroulé de la bande de roulement d'un pneumatique de l'invention avec trois familles de barrettes (A, B, C). La barrette C a la plus grande longueur L2, une épaisseur moyenne E2, et la barrette A a la plus petite longueur L1, une épaisseur moyenne E1. L'angle Ψ représente l'inclinaison moyenne d'une barrette avec la direction circonférentielle.

L'invention a été plus particulièrement étudiée pour un pneumatique agricole de dimension 710/70R42. Pour cette dimension deux versions ont été testées : une première avec une sculpture mono pas conformément à l'état de l'art, et une deuxième version conforme à l'invention avec trois familles de barrettes A, B, et C à pas variables.

Chaque barrette A, B, et C, est l'élément de base des trois motifs de sculpture de la bande de roulement. Les pas respectivement (S, M, L) sont associés respectivement aux barrettes (A, B, C) tel que S <M <L.

Un tel exemple de motif de sculpture est représenté sur la figure 1-B avec les deux barrettes de base qui sont symétriques par rapport au plan équatorial et décalée dans la direction circonférentielle. Les nez des barrettes convergent vers le centre de la bande de roulement de manière à définir le sens de rotation du pneumatique en prenant la forme d'un "V" en chevron.

On distingue deux grands types d'émergences qui sont causés par l'impact des barrettes sur la chaussée dont l'arrangement n'est pas optimisé : le sirènement et le battement. Ce sont des émergences dont la puissance acoustique est très supérieure à la puissance moyenne du spectre et auxquelles l'oreille humaine est particulièrement sensible.

La cadence des impacts de la sculpture sur le sol à l'entrée de l'aire de contact est rythmée par l'ordre de succession des motifs. Si les motifs sont tous de même taille, ils se succèdent à un rythme parfaitement régulier. Une seule fréquence sera alors sollicitée, ce qui produira un son ressemblant à celui d'une "sirène". Disposer de plusieurs tailles de motifs permet de brouiller le signal sonore émis par la sculpture du pneu, c'est-à-dire d'amoindrir les émergences, pour tendre vers un bruit blanc.

Le battement également appelé modulation d'amplitude se manifeste quand deux sons qui ont des fréquences très proches sont émis simultanément. Si ces sons sont d'amplitudes comparables, ils s'annulent à chaque fois qu'ils sont en opposition de phase, puis s'ajoutent lorsqu'ils sont en phase. Cela forme un phénomène de modulation d'amplitude.

Pour optimiser l'arrangement des motifs de manière à diminuer le bruit de sirènement et de battement, à chaque motif de sculpture est associé un signal élémentaire, par exemple sinusoïdale. Pour un tour de roue complet, le signal associé est périodique et résulte de la sommation des signaux élémentaires.

Avec l'aide d'un outil numérique, l'optimisation de l'arrangement initial vis-à-vis du bruit de sirènement et de battement est opérée en procédant à des simulations sur différents arrangements. Par une transformation de Fourrier du signal associé à l'arrangement, le spectre du signal est analysé dans le domaine fréquentiel. Les critères d'arrêt du processus d'optimisation sont liés à l'amplitude des émergences de sirènement et de battement, ainsi qu'à leur étalement sur l'axe des fréquences.

A l'issue de cette approche itérative pour la dimension pneumatique étudiée, le nombre total de motifs de la bande de roulement s'établit à 23 paires de barrettes arrangés suivant la séquence : ABBCCBAABAABBCCBCCBAABC, le long de la circonférence du pneumatique égale à 6465.4 mm. La sculpture de la bande de roulement du pneumatique réalisée comprend donc 7 motifs A, 9 motifs B et enfin 6 motifs C. Le tableau qui suit récapitule les caractéristiques des barrettes sur au moins une rangée R1 ou R2:

**[Tableau 1]**

| | **Nombre** | **Longueur circonférentielle d'une Barrette** | **Epaisseur moyenne barrette** | **Pas circonférentiel d'un motif** | **Inclinaison** |
|---|---|---|---|---|---|
| motifs A | 7 | 307.6 | 48,7 | 234,3 | 47.6 ° |
| motifs B | 9 | 332.7 | 52 | 275,7 | 47.6 ° |
| motifs C | 6 | 357.8 | 60,3 | 334,8 | 47.6 ° |

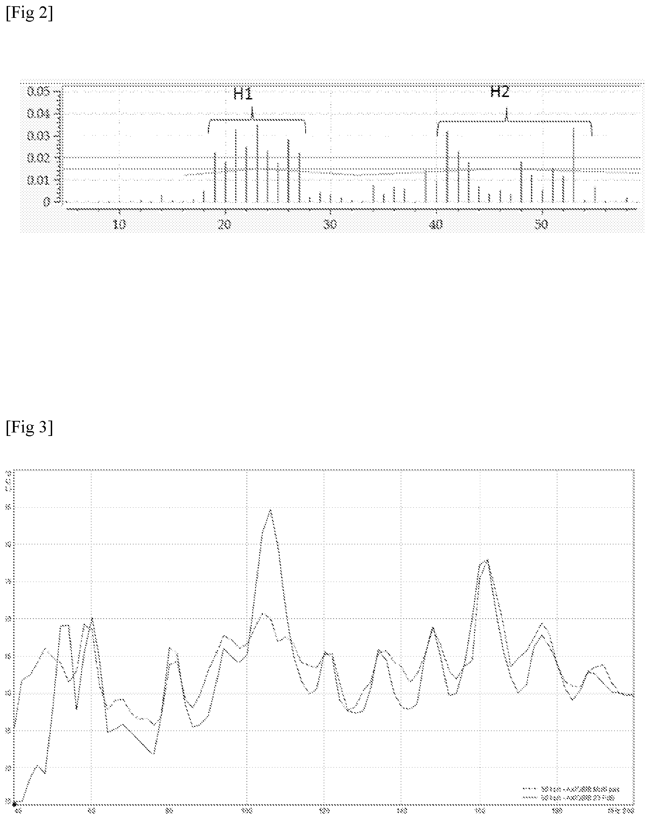

La figure 2 représente le spectre harmonique de l'arrangement des motifs des sculptures. Elle fait apparaître deux massifs de fréquence, H1 et H2. Le massif H1 est centré sur l'harmonique n° 23 lié au nombre de paires de barrettes, et le massif H2 quant à lui est lié à chaque barrette unitaire soit 46 barrettes. L'allure du spectre montre l'absence d'émergences et l'étalement des amplitudes de puissance rayonnée des massifs H1 et H2 qui confirment l'optimisation du spectre lié à l'arrangement retenu.

Dans cet exemple, la hauteur maximale des barrettes Hmax vaut 65 mm, et l'angle d'inclinaison Ψ avec la direction circonférentielle vaut 47°.

Le taux d'entaillement volumique TEV étant égal au rapport entre le volume total des rainures séparant les barrettes et le volume total radialement compris entre la surface de fond et la surface de roulement, alors le taux d'entaillement volumique TEV est égal à 80%.

Le pneumatique réalisé dans la dimension 710/70 R42 a subi un test d'évaluation du bruit dans l'habitacle. Le test consiste à mesurer le bruit dans l'habitacle à l'aide de deux microphones positionnés au niveau des oreilles du conducteur, lors de passages à vitesses constantes de 55/50/45/40 km/h sur une route asphaltée.

Le pneumatique testé est monté sur l'essieu arrière, gonflé à une pression de 1.6 bar, et soumis à une charge 5350 kg. Sur l'essieu avant les pneus sont lisses après rabotage.

La figure 3 montre le résultat du test qui est le spectre harmonique du signal mesuré dans l'habitacle du véhicule. La courbe C2 en traits discontinus représente le pneu de l'invention et celui en continu C1, le pneu de référence. Dans la plage de fréquences 100hz-130hz concernée par la résonnance d'une harmonique de la sculpture et le mode propre de la cabine, l'amplitude de la puissance acoustique est significativement diminuée supprimant ainsi la gêne perçue par l'utilisateur.

L'invention peut être aisément extrapolée à des pneumatiques, par exemple et de manière non exhaustive, qui équipent des véhicules utilitaires à usage mixte sur route asphaltée, et/ou sur route tout terrain.

## Revendications

1. Pneumatique (1) pour véhicule à usage agricole comprenant une bande de roulement (10), destinée à entrer en contact avec un sol par l'intermédiaire d'une surface de roulement:
- la bande de roulement (10) comprenant des éléments en relief (20) ou barrettes (20), séparés au moins en partie les uns des autres par des rainures (30) et s'étendant radialement vers l'extérieur à partir d'une surface de fond jusqu'à la surface de roulement sur une hauteur radiale H au moins égale à 30 mm et au plus égale à l'épaisseur radiale Hₘₐₓ de la bande de roulement (10) ;
- les barrettes (20) étant réparties en deux rangées circonférentielles (R1, R2) ; une première rangée circonférentielle (R1) étant constituée d'une distribution circonférentielle d'au moins deux familles de barrettes, réparties périodiquement sur la circonférence du pneumatique;
- les barrettes d'une première famille -étant réparties circonférentiellement-avec un pas S le plus court, et les barrettes d'une deuxième famille étant réparties circonférentiellement avec un pas L le plus long;
chaque barrette (20) de la première rangée circonférentielle (R1) étant en outre inclinée d'un angle Ψ par rapport à la direction circonférentielle (XX') du pneumatique;
- la deuxième rangée circonférentielle (R2) étant obtenue par une symétrie de la première rangée circonférentielle (R1) par rapport à un plan équatorial (100), passant par le centre de la bande de roulement et perpendiculaire à l'axe de rotation (YY') du pneumatique , puis par un décalage en rotation d'angle θ autour de l'axe de rotation (YY');
- le décalage en rotation étant **caractérisé par** une distance de recouvrement (R) entre les barrettes de la première rangée circonférentielle et celles de la deuxième rangée circonférentielle, définie comme la distance circonférentielle entre l'extrémité axialement extérieure de toute barrette (20) de la première rangée circonférentielle (R1) et l'extrémité axialement intérieure de la barrette (20) de la deuxième rangée circonférentielle (R2) en vis-à-vis, selon le sens de rotation du pneumatique (1)
**caractérisé en ce que** le rapport S/L du pas S le plus court de la première famille de barrettes sur le pas L le plus long de la deuxième famille de barrettes est compris dans l'intervalle [0.6 ; 0.8], **et en ce que** la distance circonférentielle de recouvrement R entre les première et deuxième rangées circonférentielles de barrettes est constante sur toute la circonférence du pneumatique.

2. Pneumatique (1) selon la revendication 1, **dans lequel** la distance de recouvrement R entre les première et deuxième rangées circonférentielles de barrettes est comprise dans l'intervalle [L/4 ; L/2].

3. Pneumatique (1) selon l'une quelconque des revendications 1 ou 2, **dans lequel** l'angle de rotation θ de la deuxième rangée circonférentielle (R2) par rapport à la première rangée circonférentielle (R1) est compris dans l'intervalle [5°; 15°].

4. Pneumatique (1) selon l'une quelconque des revendications 1 à 3, les barrettes de la première famille ayant une épaisseur moyenne E1 et les barrettes de la deuxième famille ayant une épaisseur moyenne E2, **dans lequel** la variation relative d'épaisseur (E2-E1/E2) est inférieure ou égale à 25%.

5. Pneumatique (1) selon l'une quelconque des revendications 1 à 4, **dans lequel** l'angle Ψ d'inclinaison moyenne de chaque barrette avec la direction circonférentielle (XX') est inférieur ou égal à 50°.

6. Pneumatique (1) selon l'une des revendications précédentes de 1 à 5, la bande de roulement comprenant au moins deux rangées de barrettes avec trois familles (A, B, C) associées respectivement au pas le plus court S, au pas intermédiaire M, et au pas le plus long L **dans lequel** le pas intermédiaire M est égal à la moyenne arithmétique du pas le plus court S et du pas le plus long L.

7. Pneumatique (1) selon l'une quelconque des revendications de 1 à 6, la bande de roulement ayant un développement au centre compris dans l'intervalle [6300 ; 6850] mm, et ayant deux rangées de N barrettes, N allant de 20 à 25, chacune desdites rangées ayant trois familles de barrettes (A, B, C), **dans lequel** l'arrangement des familles de barrettes suit les séquences suivantes pour chaque rangée :
- N=20, la séquence est : BCCCBBAAAAACBBCABBAA
- N=21, la séquence est : AABCBCAACBAABCCCBBBAA
- N=22, la séquence est : CCABBBBBAAACCCCBAAAAAB
- N=23, la séquence est : ABBCCBAABAABBCCBCCBAABC
- N=24, la séquence est : BBCCCBBAAAABCCCAAABBBCAA
- N=25, la séquence est : BBCBBAAABCCCBBBAAAAACCCAA

8. Pneumatique (1) selon l'une quelconque des revendications de 1 à 6, la bande de roulement ayant un développement au centre compris dans l'intervalle [5500; 6000] mm, et ayant deux rangées de N barrettes, N allant de 20 à 25, chacune desdites rangées ayant trois familles de barrettes (A, B, C), **dans lequel** l'arrangement des familles de barrettes suit les séquences suivantes pour chaque rangée :
N=20, la séquence est : BBACBCAAAAABBCCCBAAB
- N=21, la séquence est : CCAACBBAABCCCBBBAAAAB
- N=22, la séquence est : CCAABABBBBBCCAAAAAABCC
- N=23, la séquence est : BAAAAAABCCCBBAAACBBBBCC
- N=24, la séquence est : BCCAAAAACCCCBBAABBAACBBB
- N=25, la séquence est : BBAACCCAAAAABBBCCCBAAABBC

9. Pneumatique (1) selon l'une quelconque des revendications 1 à 8, la bande de roulement ayant un taux d'entaillement volumique TEV égal au rapport entre le volume total des rainures (30) séparant les éléments en relief (20) et le volume total radialement compris entre la surface de fond et la surface de roulement, **dans lequel** le taux d'entaillement volumique TEV est compris entre 50% et 80%.

## Patentansprüche

1. Reifen (1) für ein landwirtschaftliches Fahrzeug, umfassend einen Laufstreifen (10), der dazu bestimmt ist, über eine Lauffläche mit einem Boden in Kontakt zu treten:
- wobei der Laufstreifen (10) Reliefelemente (20) oder Stollen (20) umfasst, die wenigstens teilweise durch Rillen (30) voneinander getrennt sind und sich radial nach außen von einer Bodenfläche bis zur Lauffläche über eine radiale Höhe H erstrecken, die wenigstens gleich 30 mm und höchstens gleich der radialen Dicke Hₘₐₓ des Laufstreifens (10) ist;
- wobei die Stollen (20) in zwei umlaufenden Reihen (R1, R2) verteilt sind;
wobei eine erste umlaufende Reihe (R1) von einer Umfangsverteilung wenigstens zweier Stollenfamilien gebildet ist, die periodisch über den Umfang des Reifens verteilt sind;
- wobei die Stollen einer ersten Familie in Umfangsrichtung mit einem kürzesten Abstand S verteilt sind und die Stollen einer zweiten Familie in Umfangsrichtung mit einem längsten Abstand L verteilt sind;
wobei jeder Stollen (20) der ersten umlaufenden Reihe (R1) ferner um einen Winkel Ψ im Verhältnis zur Umfangsrichtung (XX') des Reifens geneigt ist;
- wobei die zweite umlaufende Reihe (R2) durch eine Symmetrie der ersten umlaufenden Reihe (R1) im Verhältnis zu einer Äquatorialebene (100), die durch den Mittelpunkt des Laufstreifens und senkrecht zur Drehachse (YY') des Reifens verläuft, dann durch einen Drehversatz um einen Winkel θ um die Drehachse (YY') erhalten wird;
- wobei der Drehversatz durch einen Überlappungsabstand (R) zwischen den Stollen der ersten umlaufenden Reihe und jenen der zweiten umlaufenden Reihe gekennzeichnet ist, der als der umlaufende Abstand zwischen dem axial äußeren Ende jedes Stollens (20) der ersten umlaufenden Reihe (R1) und dem axial inneren Ende des Stollens (20) der zweiten umlaufenden Reihe (R2) gegenüber in der Drehrichtung des Reifens (1) definiert ist
**dadurch gekennzeichnet, dass** das Verhältnis S/L des kürzesten Abstands S der ersten Stollenfamilie zum längsten Abstand L der zweiten Stollenfamilie im Bereich [0.6; 0.8] liegt, und dadurch, dass der Überlappungsabstand R in Umfangsrichtung zwischen der ersten und zweiten umlaufenden Stollenreihe über den gesamten Umfang des Reifens konstant ist.

2. Reifen (1) nach Anspruch 1, wobei der Überlappungsabstand R zwischen der ersten und zweiten umlaufenden Stollenreihe im Bereich [L/4; L/2] liegt,

3. Reifen (1) nach einem der Ansprüche 1 oder 2, wobei der Drehwinkel θ der zweiten umlaufenden Reihe (R2) im Verhältnis zur ersten umlaufenden Reihe (R1) im Bereich [5°; 15°] liegt.

4. Reifen (1) nach einem der Ansprüche 1 bis 3, wobei die Stollen der ersten Familie eine mittlere Dicke E1 und die Stollen der zweiten Familie eine mittlere Dicke E2 aufweisen, wobei die relative Dickenvariation (E2- E1/E2) kleiner als oder gleich 25 % ist.

5. Reifen (1) nach einem der Ansprüche 1 bis 4, wobei der mittlere Neigungswinkel Ψ jedes Stollens zur Umfangsrichtung (XX') kleiner als oder gleich 50° ist.

6. Reifen (1) nach einem der vorhergehenden Ansprüche 1 bis 5, wobei der Laufstreifen wenigstens zwei Stollenreihen mit drei Familien (A, B, C) umfasst, die dem kürzesten Abstand S, dem Zwischenabstand M bzw. dem längsten Abstand L zugeordnet sind, wobei der Zwischenabstand M gleich dem arithmetischen Mittelwert des kürzesten Abstands S und des längsten Abstands L ist.

7. Reifen (1) nach einem der Ansprüche 1 bis 6, wobei der Laufstreifen eine Mittenabwicklung im Bereich [6300; 6850] mm aufweist und zwei Reihen von N Stollen aufweist, wobei N von 20 bis 25 beträgt, wobei jede der Reihen drei Stollenfamilien (A, B, C) aufweist, wobei die Anordnung der Stollenfamilien für jede Reihe den folgenden Sequenzen folgt:
- N=20, die Sequenz ist: BCCCBBAAAAACBBCABBAA
- N=21, die Sequenz ist: AABCBCAACBAABCCCBBBAA
- N=22, die Sequenz ist: CCABBBBBAAACCCCBAAAAAB
- N=23, die Sequenz ist: ABBCCBAABAABBCCBCCBAABC
- N=24, die Sequenz ist: BBCCCBBAAAABCCCAAABBBCAA
- N=25, die Sequenz ist: BBCBBAAABCCCBBBAAAAACCCAA

8. Reifen (1) nach einem der Ansprüche 1 bis 6, wobei der Laufstreifen eine Mittenabwicklung im Bereich [5500; 6000] mm aufweist und zwei Reihen von N Stollen aufweist, wobei N von 20 bis 25 beträgt, wobei jede der Reihen drei Stollenfamilien (A, B, C) aufweist, wobei die Anordnung der Stollenfamilien für jede Reihe den folgenden Sequenzen folgt:
N=20, die Sequenz ist: BBACBCAAAAABBCCCBAAB
- N=21, die Sequenz ist: CCAACBBAABCCCBBBAAAAB
- N=22, die Sequenz ist: CCAABABBBBBCCAAAAAABCC
- N=23, die Sequenz ist: BAAAAAABCCCBBAAACBBBBCC
- N=24, die Sequenz ist: BCCAAAAACCCCBBAABBAACBBB
- N=25, die Sequenz ist: BBAACCCAAAAABBBCCCBAAABBC

9. Reifen (1) nach einem der Ansprüche 1 bis 8, wobei der Laufstreifen eine Volumeneinkerbungsrate TEV aufweist, die gleich dem Verhältnis zwischen dem Gesamtvolumen der Rillen (30), die die Reliefelemente (20) trennen, und dem radial zwischen der Bodenfläche und der Lauffläche enthaltenen Gesamtvolumen ist, wobei die Volumeneinkerbungsrate TEV zwischen 50 % und 80 % beträgt.

## Claims

1. Tyre (1) for a vehicle for agricultural use, comprising a tread (10) intended to come into contact with the ground via a tread surface:
- the tread (10) comprising raised elements (20) or lugs (20) that are separated from one another at least in part by grooves (30) and extend radially towards the outside from a bottom surface as far as the tread surface over a radial height H at least equal to 30 mm and at most equal to the radial thickness Hₘₐₓ of the tread (10);
- the lugs (20) being distributed in two circumferential rows (R1, R2);
a first circumferential row (R1) being made up of a circumferential distribution of at least two families of lugs, distributed periodically around the circumference of the tyre;
- the lugs of a first family being distributed circumferentially with a shortest spacing S, and the lugs of a second family being distributed circumferentially with a longest spacing L;
each lug (20) of the first circumferential row (R1) also being inclined at an angle Ψ with respect to the circumferential direction (XX') of the tyre;
- the second circumferential row (R2) being obtained through symmetry of the first circumferential row (R1) with respect to an equatorial plane (100), passing through the centre of the tread and perpendicular to the axis of rotation (YY') of the tyre, followed by a rotational offset of angle θ about the axis of rotation (YY');
- the rotational offset being **characterized by** an overlap distance (R) between the lugs of the first circumferential row and those of the second circumferential row, defined as being the circumferential distance between the axially outer end of each lug (20) of the first circumferential row (R1) and the axially inner end of the lug (20) of the facing second circumferential row (R2), according to the direction of rotation of the tire (1),
**characterized in that** the ratio S/L of the shortest spacing S of the first family of lugs to the longest spacing L of the second family of lugs lies within the range [0.6; 0.8], **and in that** the circumferential overlap distance R between the first and second circumferential rows of lugs is constant around the entire circumference of the tyre.

2. Tyre (1) according to Claim 1, **wherein** the overlap distance R between the first and second circumferential rows of lugs lies within the range [L/4; L/2].

3. Tyre (1) according to either one of Claims 1 and 2, **wherein** the rotational angle θ of the second circumferential row (R2) with respect to the first circumferential row (R1) lies within the range [5°; 15°].

4. Tyre (1) according to any one of Claims 1 to 3, with the lugs of the first family having a mean thickness E1 and the lugs of the second family having a mean thickness E2, **wherein** the relative variation in thickness (E2-E1/E2) is less than or equal to 25%.

5. Tyre (1) according to any one of Claims 1 to 4, **wherein** the mean inclination angle `P of each lug with respect to the circumferential direction (XX') is less than or equal to 50°.

6. Tyre (1) according to one of the preceding Claims 1 to 5, with the tread comprising at least two rows of lugs with three families (A, B, C) associated respectively with the shortest spacing S, the intermediate space M, and the longest spacing L, **wherein** the intermediate spacing M is equal to the arithmetic mean of the shortest spacing S and the longest spacing L.

7. Tyre (1) according to any one of Claims 1 to 6, with the tread having a development at the centre that lies in the range [6300; 6850] mm, and having two rows of N lugs, N ranging from 20 to 25, each of said rows having three families of lugs (A, B, C), **wherein** the arrangement of the families of lugs follows the following sequences for each row:
- N=20, the sequence is: BCCCBBAAAAACBBCABBAA
- N=21, the sequence is: AABCBCAACBAABCCCBBBAA
- N=22, the sequence is: CCABBBBBAAACCCCBAAAAAB
- N=23, the sequence is: ABBCCBAABAABBCCBCCBAABC
- N=24, the sequence is: BBCCCBBAAAABCCCAAABBBCAA
- N=25, the sequence is: BBCBBAAABCCCBBBAAAAACCCAA

8. Tyre (1) according to any one of Claims 1 to 6, with the tread having a development at the centre that lies in the range [5500; 6000] mm, and having two rows of N lugs, N ranging from 20 to 25, each of said rows having three families of lugs (A, B, C), **wherein** the arrangement of the families of lugs follows the following sequences for each row:
N=20, the sequence is: BBACBCAAAAABBCCCBAAB
- N=21, the sequence is: CCAACBBAABCCCBBBAAAAB
- N=22, the sequence is: CCAABABBBBBCCAAAAAABCC
- N=23, the sequence is: BAAAAAABCCCBBAAACBBBBCC
- N=24, the sequence is: BCCAAAAACCCCBBAABBAACBBB
- N=25, the sequence is: BBAACCCAAAAABBBCCCBAAABBC

9. Tyre (1) according to any one of Claims 1 to 8, with the tread having a volumetric void ratio TEV equal to the ratio between the total volume of the grooves (30) separating the raised elements (20) and the total volume radially contained between the bottom surface and the tread surface, **wherein** the volumetric void ratio TEV is between 50% and 80%.
